# NEUE EUROPÄISCHE PATENTSCHRIFT

(11) **EP 1 779 915 B2**
(45) Veröffentlichungstag und Bekanntmachung des Hinweises auf die Entscheidung über den Einspruch: **06.05.2015**
(45) Hinweis auf die Patenterteilung: 16.02.2011
(21) Anmeldenummer: 06013426.9
(22) Anmeldetag: 29.06.2006
(51) Int. Cl.: B01D 46/06

(54) **Stützkorb für Filterschläuche**
Supporting basket for filter hoses
Panier de support pour tuyaux flexibles de filtre

(30) Priorität: 31.08.2005 DE 10541521
(43) Veröffentlichungstag der Anmeldung: 02.05.2007
(73) Patentinhaber: Voss & Eiffert GmbH, 58739 Wickede/Ruhr (DE)
(72) Erfinder: Voss, Reinhold, 58710 Menden (DE)
(74) Vertreter: Patentanwälte Dörner & Kötter PartG mbB

(56) Entgegenhaltungen:
- EP-A- 0 733 392
- DD-A1- 204 399
- DE-A1- 3 709 365
- SE-B- 445 015

## Beschreibung

Die Erfindung betrifft einen Filterstützkorb gemäß dem Oberbegriff nach Patentanspruch 1.

Stützkörbe für Filterschläuche kommen zur Anwendung bei Filtermedien, zum Beispiel in Kraftwerksanlagen, Müllverbrennungsanlagen und technischen Anlagen, in denen eine Filterung der Zu- oder Abluft erforderlich ist. Die Stützkörbe bestehen aus Längsstäben und Ringen. Die im Kreis angeordneten Längsstäbe umgeben die Ringe, die über die Länge der Längsstäbe verteilt sind. Die Ringe sind mit den Stäben verschweißt. Für die Stützung der Filter ist oft eine sehr große Länge der Stützkörbe erforderlich. Aus produktions- und transporttechnischen Gründen sind die Stützkörbe daher in der Regel zweigeteilt ausgeführt. Der endgültige Stützkorb wird dann vor Ort aus den einzelnen Teilen zusammengesetzt.

Zur Verbindung der einzelnen Elemente des Stützkorbes ist es bekannt (vgl. EP 0 733 392 A1), die freien Enden der Längsstäbe eingezogen auszubilden.

Benachbart zu dem eingezogenen Ende ist jeweils an den Längsstäben eine Einschnürung vorgesehen. Beim Zusammenführen der benachbarten Körbe passieren die eingezogenen Enden den jeweils ersten Ring des benachbarten Korbteils bis der Ring in der jeweiligen Einschnürung einrastet. Nachteilig an dieser Art der Stützkörbe ist ihre geringe Stabilität, wodurch sich bei auftretenden Axialkräften die Verbindung der benachbarten Körbe selbständig lösen kann. Zudem können bei nicht fachgerechter Montage die Längsstäbe aus dem Filterkorb herausragen und dadurch den Filterschlauch beschädigen. Um diesem Verschleiß vorzubeugen sind die Filterschläuche im Bereich der Verbindung zweier benachbarter Körbe in der Regel mit einer Verstärkung versehen.

Darüber hinaus ist es zur Verbindung benachbarter Filterstützkörbe bekannt (vgl. DD 204 399 A1), an einem der Körbe zwei parallel zueinander angeordnete Ringe innenliegend anzuschweißen. Der benachbarte Korb weist an seinem freien Ende einen außenliegenden Ring auf, der nicht geschlossen ausgebildet ist. Durch die nicht-geschlossene Ausführung des Ringes ist eine Durchmesserverringerung möglich, sodass bei Zusammenführung der benachbarten Körbe der außenliegende Ring des einen Korbes in den zwischen den beiden innenliegenden Ringen gebildeten Freiraum einfahren kann. Nachteilig bei dieser Art der Verbindung ist, dass der Filterschlauch einem starken Verschleiß unterliegt, da die Längsstäbe des einen Korbes außen liegen, wodurch an den Enden der Längsstäbe scharfe Kanten ausgebildet sind. Dies kann zur Beschädigung des Filterschlauchs führen. Auch hierbei sind die Filterschläuche im Bereich der Verbindung zweier benachbarter Körbe in der Regel mit einer Verstärkung versehen, um dem Verschleiß vorzubeugen.

Hier will die Erfindung Abhilfe schaffen. Der Erfindung liegt die Aufgabe zugrunde, einen Stützkorb für Filterschläuche zu schaffen, der einerseits eine zuverlässige Verbindung der benachbarten Stützkörbe ermöglicht, andererseits Beschädigungen am Filterschlauch selbst vermeidet. Gemäß der Erfindung wird diese Aufgabe durch die Merkmale des Patentanspruchs 1 gelöst.

Mit der Erfindung ist ein Stützkorb für Filterschläuche geschaffen, der eine zuverlässige Verbindung benachbarter Stützkorbelemente ermöglicht. Gleichzeitig ist die Gefahr einer Beschädigung des Filterschlauchs durch den Stützkorb reduziert, weshalb auf die Anordnung von Verstärkungen am Filterschlauch im Bereich der Verbindung zweier benachbarter Filterkörbe verzichtet werden kann. Zudem ist der Neigung der Stützkörper, sich gegeneinander zu verdrehen, entgegengewirkt.

Dabei ist der Kupplungsring mit einer Sicke versehen. Hierdurch ist einerseits die Stabilität des Kupplungsrings erhöht, andererseits eine Unterteilung des Kupplungsrings hervorgerufen.

Da die Sicke auf der Mittellinie des Kupplungsrings verläuft, ist eine Unterteilung in zwei gleich große Bereiche erzielt.

Zudem sind in dem Kupplungsring zwei Aufnahmen für die Ringe ausgebildet. Die Aufnahmen bieten aufgrund ihrer Ausgestaltung die Möglichkeit einer passgenauen Aufnahme der Ringe, wodurch die Zuverlässigkeit der Verbindung zusätzlich erhöht ist.

Ein Ausführungsbeispiel der Erfindung ist in der Zeichnung dargestellt und wird nachfolgend im Einzelnen beschrieben. Es zeigen:

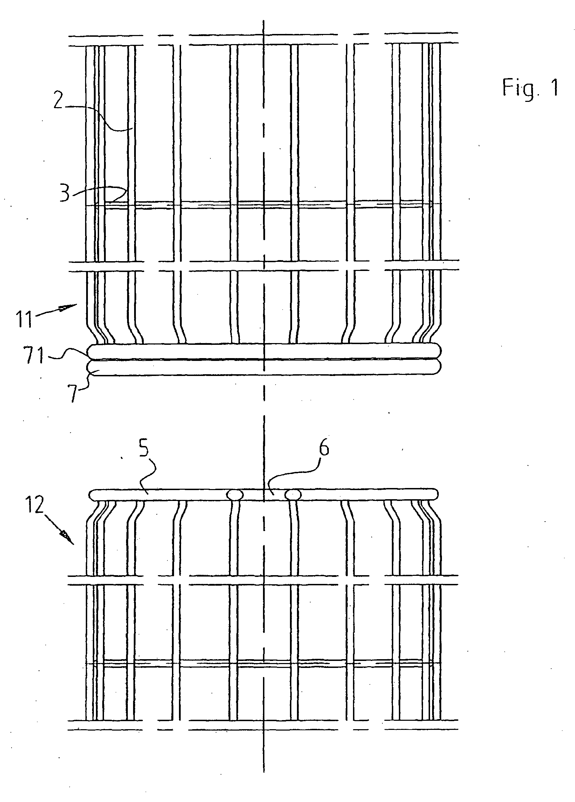

- Fig. 1: die schematische Darstellung zweier benachbarter Stützkorbteile;

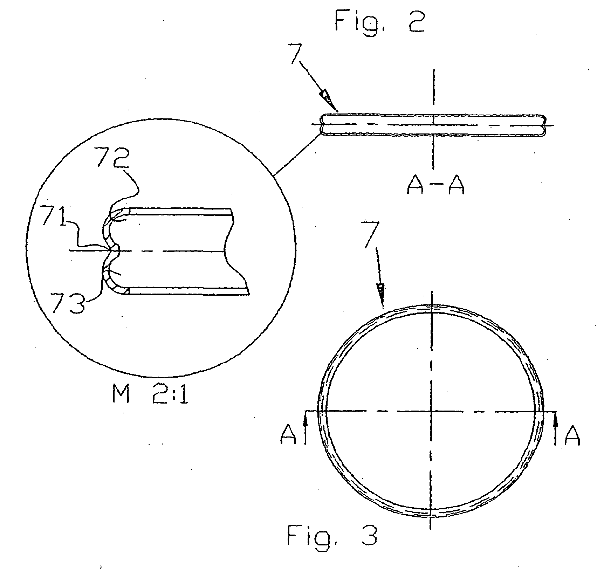

- Fig. 2: den Schnitt entlang der Linie A-A durch einen Kupplungsring;
- Fig. 3: die Draufsicht auf den in Figur 2 dargestellten Kupplungsring;

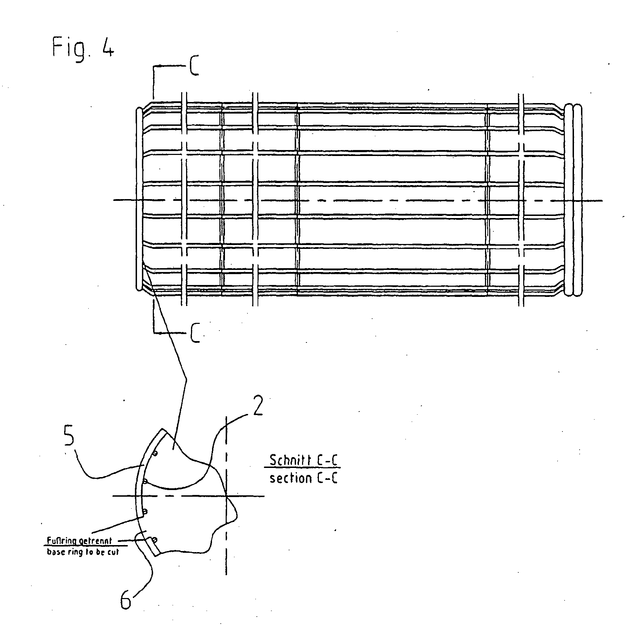

- Fig. 4: die Ansicht eines Stützkorbteils mit Kupplungsring;

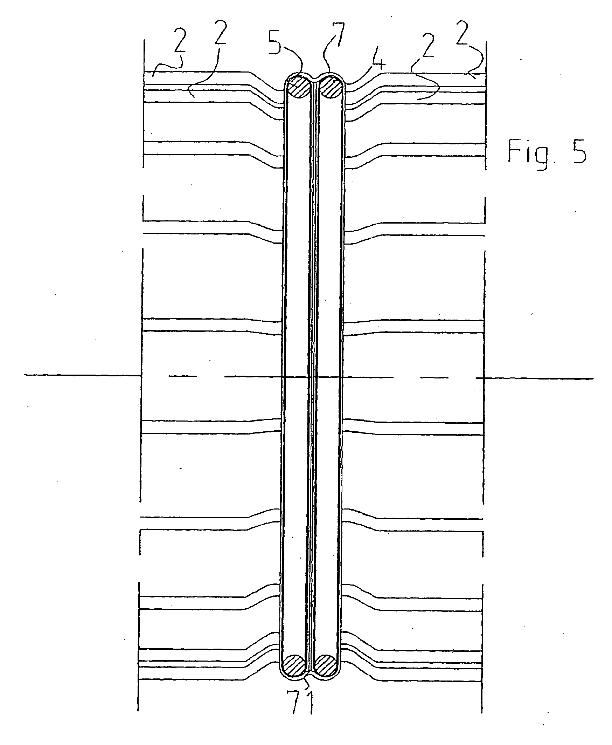

- Fig. 5: eine vergrößerte Darstellung zweier benachbarter Stützkorbteile in zusammengebautem Zustand;

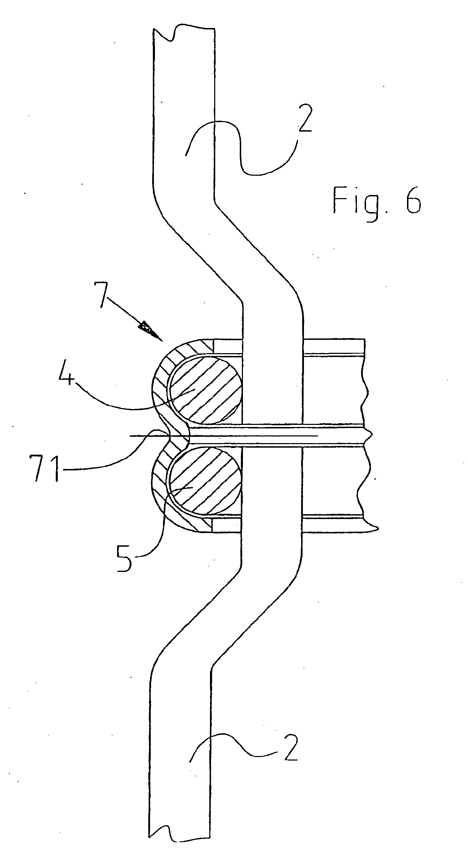

- Fig. 6: eine ausschnittsweise, vergrößerte Darstellung der in Figur 5 dargestellten Verbindung der benachbarten Stützkorbteile.

Der als Ausführungsbeispiel gewählte Stützkorb 1 ist von einem Korboberteil 11 und einem Korbunterteil 12 gebildet. Diese bestehen aus Längsstäben 2 und Ringen 3. Die im Kreis angeordneten Längsstäbe 2 umgeben die Ringe 3, die über die Länge der Längsstäbe verteilt sind. Die Ringe 3 sind mit den Längsstäben 2 verschweißt. Die Ringe 3 sind auf der Innenseite der Längsstäbe 2 angeordnet.

An ihren Enden sind die Stäbe 2 eingezogen ausgebildet, woraus eine Durchmesserverringerung resultiert. Im Bereich des geringsten Durchmessers sind an dem Stützkorb-Oberteil 11 sowie dem Stützkorb-Unterteil 12 Ringe 4 und 5 vorgesehen. Die Ringe 4 und 5 weisen den gleichen Durchmesser auf wie die Ringe 3. Die Ringe 4 und 5 bilden das stirnseitige Ende des jeweiligen Stützkorbteils. Während der Ring 4 ebenso wie die Ringe 3 geschlossen ausgebildet ist, ist der Ring 5 nicht geschlossen ausgebildet, wodurch ein Spalt 6 hervorgerufen ist. Aufgrund der nicht geschlossenen Ausführung des Ringes 5 ist eine Durchmesserverringerung dieses Endes des jeweiligen Stützkorbteils möglich.

An dem Stützkorb 1 ist ein Kupplungsring 7 vorgesehen. Der Kupplungsring 7 ist auf dem Ring 4 des jeweiligen Stützkorbteils fixiert, weshalb der Innendurchmesser des Kupplungsrings 7 im Wesentlichen dem Außendurchmesser der Ringe 4 und 5 entspricht. Der Kupplungsring 7 weist eine umlaufende Sicke 71 auf, die auf der Mittellinie des Ringes 7 angeordnet ist und dadurch den Kupplungsring 7 in zwei gleiche Teile teilt, die Aufnahmen 72 und 73 für die Ringe 4 und 5 bilden. Die Aufnahmen 72 und 73 haben einen im Wesentlichen kreisabschnittförmigen Querschnitt. Der Durchmesser der Kreisabschnitte ist gleich der Stärke der Ringe 4 und 5. Die Aufnahme 72 des Kupplungsrings 7 nimmt den Ring 4 auf. Der Kupplungsring 7 ist mit dem Ring 4 verschweißt.

Zur Montage zweier benachbarter Stützkörbe 1 werden die Korbteile koaxial zueinander ausgerichtet, wobei das mit dem Kupplungsring 7 versehene Ende des Stützkorbes dem mit dem Ring 5 versehenen Ende des Stützkorbes zugewandt ist. Zur Montage werden das Oberteil 11 und das Unterteil 12 des Stützkorbs 1 aufeinander zu bewegt. Beim Zusammenführen des Stützkorbunterteils 12 mit dem Stützkorboberteil 11 fährt der Ring 5 in den Kupplungsring 7 ein. Dabei taucht der Ring 5 in den Kupplungsring 7 ein. Beim Passieren des äußersten Endes des Kupplungsrings 7 wird der Ring 5 zusammengedrückt, was zu einer Verringerung seines Durchmessers führt. Eine solche Verringerung des Durchmessers ist aufgrund des Spaltes 6 in dem Ring 5 ungehindert möglich. Nachdem der Ring 5 die schmalste Stelle des Kupplungsrings 7 passiert hat, dehnt sich dieser wieder aus und fährt in die Aufnahme 73 des Kupplungsrings 7. Er stützt sich dabei allseitig in der Aufnahme 73 ab und ist hierdurch zuverlässig in dem Kupplungsring 7 gehalten. Aufgrund der Sicke 71 sind die Ringe 4 und 5 in montiertem Zustand berührungslos in dem Kupplungsring 7 angeordnet. Durch die erfindungsgemäße Ausgestaltung ist eine sichere Verbindung des Stützkorboberteils 11 mit dem Stützkorbunterteil 12 hervorgerufen.

Durch die Fixierung mit dem Kupplungsring 7 ist eine Fixierung der Filterkörbe gegen axiale Kräfte hervorgerufen. Zudem weist diese kupplungsartige Verbindung der benachbarten Korbteile keine scharfen Kanten auf, da durch den Kupplungsring 7 die Enden der Längsstäbe 2 im Verbindungsbereich abgedeckt sind. Der Filterschlauch kommt dadurch nicht mit scharfen Kanten in Berührung, wodurch sowohl die Gefahr einer Zerstörung als auch der Verschleiß reduziert ist. Folglich ist die im Bereich der Verbindung der benachbarten Korbteile beim Stand der Technik in der Regel vorgesehene Verstärkung des Filterschlauchs entbehrlich.

## Patentansprüche

1. Filterstützkorb, der von einem Korboberteil (11) und einem Korbunterteil (12) gebildet ist, bestehend aus Längsstäben (2) und Ringen (3), die über die Länge der Längsstäbe (2) verteilt angeordnet sind, und die Längsstäbe (2) im Kreis angeordnet sind und die Ringe (3, 4) geschlossen ausgebildet sind, wobei die Ringe (3) mit den Längsstäben (2) verschweißt sind und die Ringe (3) auf der Innenseite der Längsstäbe (2) angeordnet sind und die Enden der Längsstäbe (2) eingezogen ausgebildet sind, woraus eine Durchmesserverjüngung resultiert und die Stirnseiten von Korboberteil (11) und Korbunterteil (12) mit Ringen (4, 5) versehen sind, die den gleichen Durchmesser wie die Ringe (3) aufweisen und die im Bereich der Durchmesserverjüngung der Längsstäbe (2) auf der Außenseite der Längsstäbe (2) angeordnet sind, wobei der Ring (5) einen Spalt (6) aufweist und an dem Ring (4) ein Kupplungsring (7) vorgesehen ist, dessen Innendurchmesser im Wesentlichen dem Außendurchmesser der Ringe (4, 5) entspricht und in dem der Ring (5) gehalten ist, wobei in dem Kupplungsring (7) Aufnahmen (72, 73) ausgebildet sind, die einen im Wesentlichen kreisabschnittförmigen Querschnitt haben und der Durchmesser der Kreisabschnitte gleich der Stärke der Ringe (4, 5) ist, **dadurch gekennzeichnet, dass** der Kupplungsring (7) mit einer Sicke (71) versehen ist, die auf der Mittellinie des Kupplungsrings (7) verläuft und den Kupplungsring (7) in zwei gleiche Teile teilt, die die Aufnahmen (72, 73) bilden und die die Ringe (4, 5) aufnehmen, wobei der Ring (5) in der Aufnahme (73) gehalten ist und die Aufnahme (72) den Ring (4) aufnimmt, wobei der Kupplungsring (7) mit dem Ring (4) verschweißt ist, und dass die freien Enden des Kupplungsrings (7) radial nach innen ausgerichtet sind.

## Claims

1. Supporting basket for filter hoses, which is formed by an upper basket part (11) and a lower basket part (12), consisting of longitudinal rods (2) and rings (3) which are spaced along the length of the longitudinal rods (2), and the longitudinal rods (2) are arranged in a circle and the rings (3, 4) are closed in form, where the rings (3) are welded to the longitudinal rods (2) and the rings (3) are arranged on the inner side of the longitudinal rods (2) and the ends of the longitudinal rods (2) converge thereby producing a tapered diameter, and the end faces of the upper basket part (11) and the lower basket part (12), are fitted with rings (4, 5) which have the same diameter as the rings (3) and which are arranged in the area of the tapered diameter of the longitudinal rods (2) on the outside of the longitudinal rods (2), where the ring (5) has a gap (6) and a coupling ring (7) is provided on the ring (4) whose inner diameter corresponds substantially to the outer diameter of the rings (4, 5) and in which the ring (5) is held, where seats (72, 73) are formed in the coupling ring (7) which have a cross section shaped substantially like the segment of a circle and the diameter of the segments is equal to the thickness of the rings (4, 5), **characterised in that** the coupling ring (7) has a bead (71) running on the centre line of the coupling ring (7) and dividing the coupling ring (7) into two equal parts which form the seats (72, 73) and receive the rings (4, 5), where the ring (5) is held in the seat (73) and the seat (72) receives the ring (4), where the coupling ring (7) is welded to the ring (4), and that the free ends of the coupling ring (7) point radially inwards.

## Revendications

1. Panier de support pour tuyaux flexibles de filtre composé d'une partie supérieure (11) de panier et d'une partie inférieure (12) de panier, comprenant des bâtonnets longitudinaux (2) et des bagues (3) agencées distribuées sur la longueur des bâtonnets longitudinaux (2), et les bâtonnets longitudinaux étant agencés en cercle et les bagues (3, 4) étant configurées fermées, sachant que les bagues (3) sont soudées avec les bâtonnets longitudinaux (2) et que les bagues (3) sont agencées sur le côté intérieur des bâtonnets longitudinaux (2) et que les extrémités des bâtonnets longitudinaux (2) sont configurées rentrées, d'où il résulte une diminution du diamètre, et que les côtés frontaux de la partie supérieure (11) et de la partie inférieure (12) du panier sont dotées de bagues (4, 5) présentant le même diamètre que les bagues (3) et qui sont agencées dans la zone où le diamètre des bâtonnets longitudinaux (2) diminue, sur le côté extérieur des bâtonnets longitudinaux (2), sachant que la bague (5) présente un interstice (6) et que contre la bague (4) est prévue une bague d'accouplement (7) dont le diamètre intérieur correspond pour l'essentiel au diamètre extérieur des bagues (4, 5) et dans laquelle est retenue la bague (5), sachant que dans la bague d'accouplement (7) sont configurés des évidements (72, 73) présentant une section essentiellement en arc de cercle, et que le diamètre des arcs de cercle est égal à l'épaisseur des bagues (4, 5), caractérisé en que la bague d'accouplement (7) est dotée d'une rainure (71) passant sur la ligne médiane de la bague d'accouplement (7) et qui partage la bague d'accouplement (7) en deux parties égales formant les réceptacles (72, 73) et recevant les bagues (4, 5), sachant que la bague (5) est maintenue dans le réceptacle (73) et que le réceptacle (72) reçoit la bague (4), sachant que la bague d'accouplement (7) est soudée avec la bague (4) et que les extrémités libres de la bague d'accouplement (7) sont orientées radialement vers l'intérieur.
